# EUROPÄISCHE PATENTSCHRIFT

(11) **EP 0 738 558 B1**
(45) Veröffentlichungstag und Bekanntmachung des Hinweises auf die Patenterteilung: **14.05.1997**
(21) Anmeldenummer: 96104644.8
(22) Anmeldetag: 23.03.1996
(51) Int. Cl.: B23Q 11/00, B23Q 1/00

(54) **Einrichtung zum Absaugen von mittels eines Hohlfräswerkzeuges abgetragener Späne**
Device for sucking chips from a tubular cutter
Dispositif pour l'aspiration des copeaux d'une fraise tubulaire

(30) Priorität: 03.04.1995 DE 19512401
(43) Veröffentlichungstag der Anmeldung: 23.10.1996
(73) Patentinhaber: Bornemann-Werkzeugtechnik GmbH, 31073 Delligsen (DE)
(72) Erfinder: Bornemann, Hermann, 31073 Delligsen (DE)
(74) Vertreter: Eichstädt, Alfred, Dipl.-Ing.

(56) Entgegenhaltungen:
- DE-A- 3 333 177
- US-A- 2 437 668
- US-A- 4 543 019

## Beschreibung

Die Erfindung betrifft ein Hohlfräswerkzeug mit einer Einrichtung zum Absaugen von komprimierbaren, abgetragenen Spänen aus festem, weichem oder elastischem Material durch mindestens eine Saugöffnung in der Wand des Hohlfräswerkzeuges durch den Innenraum desselben mittels eines Absaugers.

In der Fachzeitschrift "Die Gießerei und ihre Helfer" 1989/90, Seiten B6 bis B8, sind ein Verfahren und eine Fräseinrichtung der gattungsgemäßen Art beschrieben, bei der der Hohlfräser zur Bearbeitung von Hartschaum dient. Der Hartschaum ist ein Werkstoff, der aufgrund seiner physikalischen Eigenschaften eine außerordentlich schnelle Formgebung erlaubt. Dabei fallen neben den Spänen durch den Fräsvorgang auch Staubpartikel an. Diese anfallenden Späne werden unmittelbar nach der Entstehung durch Saugschlitze oder Absaugöffnungen in der Wand des hohl ausgebildeten Fräswerkzeuges hineingefördert, und zwar durch Ansaugen. Eine Hohlwelle, die den Fräser trägt, ermöglicht es, daß der Staub und die Späne durch diese hindurch abgesogen und einem Abscheider zugeführt werden können. Der Fräskopf ist so aufgebaut, daß die Hohlwelle außerhalb des Motors liegt. Dadurch wird erreicht, daß der Motor von Staub freigehalten wird. Die Hohlwelle wird dabei entweder durch ein Getriebe oder durch einen Motor hindurchgeführt und ist mit den Antriebsgliedern gekoppelt, so daß der Hohlfräser mit der gewünschten Drehgeschwindigkeit beim Bearbeitungsprozeß angetrieben wird. Die Drehzahl kann dabei stufenlos geregelt oder aber auch fest vorgegeben sein, und beispielsweise 6000, 8000 oder 15000 U/min betragen.

Die sich entsprechend schnell drehende Hohlwelle mündet freidrehend in einen Rohranschluß, an dem ein Absaugrohr oder -schlauch eines Industriestaubsaugers angeschlossen ist. Die Rückstände und die Späne lassen sich somit über einen standardisierten Industriestaubsauger verschiedenster Fabrikate durch den Hohlfräser und die Hohlwelle hindurch absaugen. Die Luftförderung sollte dabei ca. 6000 1/min oder mehr betragen. Bei Verwendung des gleichen Prinzips bei Handgeräten reichen entsprechend niedrigere Werte aus, um ein sicheres Absaugen der Späne zu gewährleisten, sofern das Werkzeug entsprechend feine Späne erzeugt.

Aus der DE 33 33 177 C2 ist ein spanabhebendes Werkzeug in Form eines Hohlfräsers bekannt, in dessen Verlängerung ein Absaugkanal vorgesehen ist, der parallel zu einem Wellenantrieb des Hohlfräsers verläuft. Der Absaugkanal ist Bestandteil eines Halters, an dem der Hohlfräser drehbar gelagert ist und durch den hindurch die Antriebswelle in einen Antriebsmotor hineingeführt ist. Ein befriedigendes Absaugen der Späne ist nur bei der Verarbeitung von Hartschaum, Aluminium und anderen relativ harten Materialien gegeben. Die Werkzeugausführung und die Absaugeinrichtung eignen sich nicht, um insbesondere weiches Material oder federndes Material, das nach der Spanabhebung auffedert, in befriedigender Weise abzuführen, da durch die Zentrifugalkräfte, die durch die hohe Bearbeitungsgeschwindigkeit beim Eintritt in den Hohlfräser auf die Späne ausgeübt werden, sich diese an den Innenwänden und den Absaugöffnungen ansetzen können und sich schnell aufbauen, so daß ein Absaugen nicht möglich ist.

Aus der CH-PS 246 321 ist ein Verfahren und eine Einrichtung zur Staubabführung bei Werkzeugmaschinen für spanabhebende Formung, insbesondere bei Schleifmaschinen und Poliermaschinen, bekannt, bei denen ein mit der Antriebswelle rotierender Ventilator aus dem Hohlwerkzeug die Späne absaugt und in einen radial austretenden Kanal abgibt. Zur Erzeugung eines gezielten Luftstromes wird über einen zweiten Zuführungskanal Luft in das Hohlwerkzeug eingeführt.

Ein Hohlfräser, der an einen elektrischen Handmotor mit einer ähnlichen Absaugeinrichtung versehen, wie die vorher beschriebene, anschließbar ist, ist weiterhin aus der US-PS 2 437 668 bekannt. Ein Ventilator erzeugt dabei den Unterdruck bzw. die Luftströmung, die erforderlich ist, um durch eine Kohlwelle und die Durchtrittsöffnungen vor den Schneidzähnen die Späne ansaugen zu können. An dem Ventilator ist eine tangentiale Austrittsöffnung vorgesehen, an der ein Absaugschlauch bzw. ein Schlauch befestigt ist, der in einem Abscheider mündet.

Mit dem Absaugen der Späne bei spanender Bearbeitung, insbesondere beim Bohren, Fräsen, Schleifen und dgl. von Verbundwerkstoffen, Schäumen oder dgl. befaßt sich auch die DE 31 43 847 A1. Die darin angegebene Hilfsvorrichtung zeichnet sich durch eine Zufuhr von Zuluft an die Bearbeitungsstelle des Werkzeuges von außerhalb der Werkzeugschneide und eine Abluftabfuhr zum Abführen der Zuluft mit angefallenen Spänen, Staub oder dgl. als Abluft von innerhalb der Werkzeugschneiden aus. Eine derartige Hilfsvorrichtung erhöht die Werkzeugstandzeit, verhindert ein Austreten von Spänen, Staub oder dgl. von der Bearbeitungsstelle in die Umgebung und unterdrückt thermische Werkstoffüberlastungen, indem die Luft gleichzeitig zur Kühlung des Werkzeuges und des Werkstücks sowie zum Abfördern von Spänen, Staub und dgl. dient.

Der Hohlfräser ist in einer Aufnahmevorrichtung einer Antriebseinrichtung befestigt und mündet in einer Absaugkammer in der Antriebsvorrichtung, die einen radialen Anschluß für einen Absaugschlauch aufweist. Die hohle Bohrstange ist dabei Bestandteil des Bohrers bzw. Fräswerkzeuges. Auch ist dieses Werkzeug nicht geeignet, insbesondere weiche oder federnd aufgehende Späne in befriedigender Weise abzuführen, da diese Teile durch die hohe Drehzahl innerhalb des Luftstromes im Hohlfräser eine so hohe Radialkraftkomponente aufweisen, daß sie sich an der Innenfläche des Hohlfräsers anlegen können, und, falls eine Adhäsion besteht, hieran haften können, so daß in kürzester Zeit durch die Späne von außen nach innen eine Wand aufgebaut wird, die das Durchströmen der Späne verhindert.

Allen bekannten Ausführungsformen haftet der Nachteil an, daß im Falle, daß bestimmte Werkstoffe bearbeitet werden, insbesondere komprimierbare Werkstoffe, wie weicher Schaumstoff, aus dem beim Arbeitsgang quasi Teile herausgerissen werden, der Fräser sowie die rotierende Hohlwelle der Fräseinheit sich in kürzester Zeit mit Spänen zusetzt. Dies ist darauf zurückzuführen, daß durch die Rotation des Hohlfräsers und der Hohlwelle der Fräseinheit die Frässpäne, die von der Absauganlage angesaugt werden, gegen die Innenwand des Hohlfräsers und der Hohlwelle gepreßt werden. Die radial wirkende Anpreßkraft erzeugt eine Reibkraft zwischen den Frässpänen und der Innenseite der Bohrung des Hohlfräsers sowie der Bohrung der Hohlwelle der Fräseinheit. Die daraus resultierende Reibkraft ist größer als die Saugkraft der Absauganlage, so daß die Frässpäne haften bleiben und nicht abgesogen werden. Adhäsionskräfte der Späne beschleunigen diesen Prozeß, insbesondere bei Verarbeitung von Weichschaum. Die Frässpäne setzen sich sodann auch in den Absaugbohrungen des Hohlfräsers fest. Da die Frässpäne bei diesem Vorgang verformt werden und sich schichtweise im Absaugkanal absetzen, ist das Absaugen der Späne nicht mehr möglich. Selbst nach Stillstand der Fräseinheit können die Späne nicht abgesaugt werden, da die komprimierten Späne im Absaugkanal festsitzen. Nur durch mechanisches Einwirken kann der Absaugkanal dann von den Spänen gesäubert werden.

Ausgehend von dem Stand der Technik liegt der Erfindung die Aufgabe zugrunde, ein Hohlfräswerkzeug mit einer Einrichtung zum Absaugen so auszubilden, daß stets eine gesicherte Abführung der Späne durch den Hohlfräser hindurch gewährleistet ist und darüber hinaus auch die Verwendung eines langen fingerförmigen Hohlfräsers bei gleichzeitiger hoher Stabilität der Anordnung und hoher Absaugleistung gewährleistet ist.

Die Aufgabe löst die Erfindung durch die im Anspruch 1 angegebenen Merkmale.

Gemäß der Erfindung ist ein Standrohr vorgesehen, auf das der Hohlfräser aufsteckbar ist, d.h. mindestens ein bestimmter langer Teil des Hohlfräsers ist drehbar auf dem Standrohr angeordnet. Wenn dieser Fräser an einer verlängerten Hohlwelle angebracht ist, so umschließt die Hohlwelle im wesentlichen über ihre gesamte Länge das Standrohr, so daß durch Zwischenfügen von Gleitlagern oder anderen Lagern eine in sich stabilere Ausführung gegeben ist, als wenn nur die Hohlwelle den fingerartigen Hohlfräser trägt. Das Standrohr kann so weit in den Hohlfräser hineinragen, daß es oberhalb der von der Fräserspitze entferntesten Saugöffnung endet. Es ist aber auch möglich, die Saugöffnung nur in dem spitzen Bereich des Fräsers vorzusehen, so daß das Ansaugrohr über fast die gesamte Länge des Fräsers in diesen hineinragt. Ebenso ist es möglich, über die Länge des aufgesetzten Hohlfräsers verteilt in der Wandung des Standrohres Ansaugöffnungen vorzusehen, über die korrespondierend die Ansaugöffnungen durch die Hohlfräserwand hindurch verlaufen, so daß die darin eintretenden Späne in das Standrohr hineingesogen werden können.

Es ist leicht zu erkennen, daß das Standrohr als festes Rohr keine Radialbeschleunigungswirkung bei der Drehung des Hohlfräsers auf die eindringenden Späne ausüben kann, so daß die Radialkraftkomponente durch den Luftstrom in der Absaugeinrichtung äußerst schnell abgebaut und nur noch eine Axialkraftkomponente auf die Späne wirkt. Ein Absetzen an der Rohrinnenseite ist deshalb nicht möglich, so daß auch mit geringerer Saugleistung ein kontinuierliches Absaugen der Späne und des Staubes beim Bearbeiten von Materialien, gleich welcher Art, gegeben ist. Besonders vorteilhaft hat sich die Ausgestaltung bei der Verwendung zum Fräsen von Weichschaum gezeigt. So ist es bei hoher Drehzahl, z.B. ca. 8000 U/min möglich, auch Weichschaumteile maßgenau fräsen zu können, ohne daß eine Späne- und Staubentwicklung entsteht, da alle Partikel, also auch die elastisch verformbaren Späne, optimal durch die Vorrichtung abgesogen werden.

Vorteilhafte Weiterbildungen der Erfindung sind in den Unteransprüchen im einzelnen angegeben.

Bei Verwendung eines Kunststoffrohres als Standrohr hat sich gezeigt, daß eine statische Aufladung durch die an der Innenseite durchströmenden Kunststoffpartikel möglich ist. Um diese statische Aufladung abzubauen, ist es empfehlenswert, elektrisch leitfähigen Kunststoff zu verwenden oder diesen mit einer Leitschicht zu versehen, zumindest aber das Kunststoffrohr mit einem Metallring an eine Erdmasse führenden Leiter anzuschließen, der beispielsweise das Gehäuse eines Motors mit Antriebshohlwelle oder eines Getriebes ist, das mit einem Motor auf einer Baueinheit gekoppelt ist. Die Vorrichtung kann grundsätzlich in stationäre Maschinen aber auch in Handmaschinen eingesetzt werden. Ebenso kann die Bearbeitungstiefe äußerst groß gewählt werden, indem das Standrohr und ggf. die Antriebshohlwelle verlängert wird oder aber auch ein äußerst langes Hohlfräswerkzeug zum Einsatz gelangt. In allen Fällen ist eine Anpassung des Standrohres an die Werkzeugausbildung notwendig. Äußerst optimal ist der Einsatz, wenn Hohlfräser verwendet werden, die Saugöffnungen nur im Bereich der Fräserspitze aufweisen, so daß das Standrohr bis ca. 10 mm vor den Saugöffnungen endend in den Hohlfräser hineingeführt werden kann. Der Hohlfräser sollte innen gleitend am Standrohr gelagert sein, zu welchem Zweck mindestens im Bereich des Endes zumindest ein Gleitlager, Rollenlager oder dergleichen vorgesehen ist. Weitere Gleitlager über die Länge verteilt können ebenfalls vorgesehen sein. Durch die hohe Drehzahl werden die Lager sehr schnell heiß. Es ist deshalb eine stetige Kühlung erforderlich. In weiterer Ausgestaltung ist hierfür mindestens eine Lüftungsbohrung oberhalb des höchstliegenden Lagers vorgesehen, die in den Zwischenraum zwischen Standrohr und Hohlwelle mündet. Durch diese wird durch die Saugluft im Standrohr Kühlluft von oben durch den Zwischenraum und die Lager nach unten in das Hohlfräserwerkzeug gesogen. eine optimale Kühlung ist somit ohne zusätzlichen Aufwand möglich, so daß Bearbeitungsgeschwindigkeiten bis ca. 25m/s erreichbar sind, ohne daß ein thermische Überbelastung auftritt. Bei Bearbeitungsmaschinen mit sehr hohen Drehzahlen, beispielsweise 15000 U/min ist es zudem zweckmäßig, in den Absaugkanal oder in den zwischen Standrohr und Hohlwelle gegebenen Luftzirkulationsraum Strömungsmeßeinrichtungen oder Temperaturmeßeinrichtungen vorzusehen, wobei in Abhängigkeit bestimmter Schwellenwerte, beispielsweise bei Reduktion des Luftstromes um die Hälfte, der Motor automatisch abschaltet oder bei Übertemperatur, beispielsweise bei Erreichen der Temperatur an den Gleitlagern von ca. 60°C, ein Abschalten des Motors erfolgt.

Weitere Gleitlagerstellen, mindestens zwei, verhindern, daß mögliche Schwingungen das Standrohr zerstören können. Zur elektrischen Ableitung der statischen Aufladung sollte das Standrohr am Ansaugstutzen mit einem Klemmring befestigt sein, der aus elektrisch leitendem Material besteht und mit einem Leiter oder einem Gehäuseteil des Antriebes verbunden ist, der auf Erdpotential liegt. Aufgrund der hohen Drehzahlen müssen die Gleitlagerstellen permanent gekühlt werden, was durch die durchströmende Luft sichergestellt ist. Als Kühlmedium wirkt also die Ansaugluft, die ohnehin für das Absaugen erforderlich ist. Ein Teil der Ansaugluft kann darüber hinaus durch Querbohrungen im Ansaugstutzen und durch den Luftspalt der Gleitlagerstellen an diese herangeführt werden, so daß die Wärmeentwicklung erheblich minimiert wird. Die Querbohrungen sollten mit Luftfiltern verschlossen sein, um das Eindringen von Staub und Spänen zu verhindern.

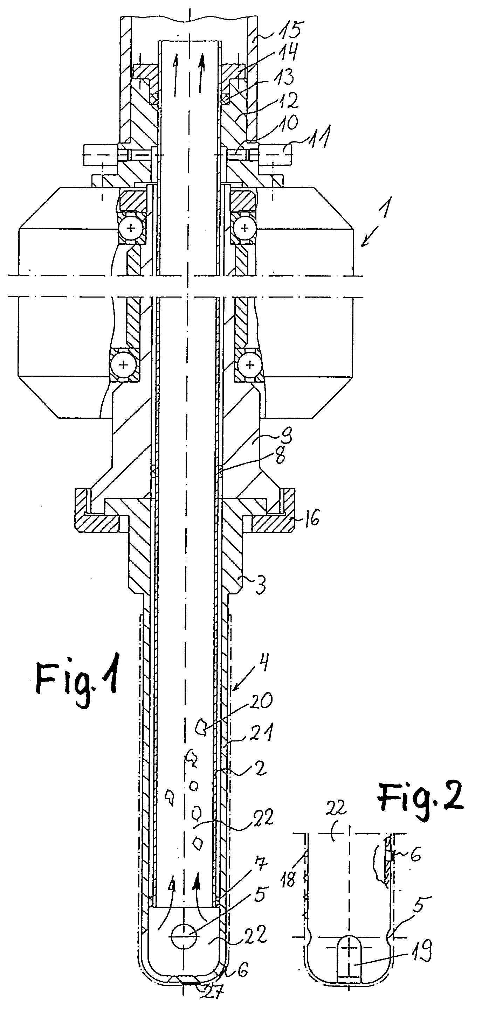

Die Erfindung wird nachfolgend anhand des in den Fig. 1 und 2 dargestellten Ausführungsbeispiels ergänzend erläutert.

Das in den Zeichnungen dargestellte Ausführungsbeispiel weist in Fig. 1 einen Motor 1 auf, der eine Hohlwelle 9 antreibt, mit der mittels eines Befestigungsschraubringes 16 ein Hohlfräser 3 verbunden ist. Der Hohlfräser 3 wird durch die Hohlantriebswelle 9 in Rotation versetzt. Der Hohlfräser weist einen unteren Arbeitsabschnitt auf, der in der Teilschnittzeichnung als Hohlkörper eingezeichnet ist. Die außen aufgebrachte strichpunktierte Linie soll den Spanbereich kennzeichnen. Der Hohlfräser kann ein Raspelfräser oder ein Schneidenfräser sein. Entsprechende Schneiden 6 und 27 sind unten eingezeichnet. Vor diesen befinden sich Durchbrüche in der Wand des Hohlfräsers, durch die die geschnittenen Späne direkt eingeführt werden. Es ist aber auch möglich, wie dies in Fig. 2 alternativ gezeigt ist, Raspelzähne 18 auf der Außenseite vorzusehen, die das Material raspelnd bearbeiten, wobei die abgetragenen Späne durch die unten vorgesehenen Ansaugöffnungen 5 und 19 hineingesogen werden. Die Ansaugöffnung 19 ist eingefräst, während die Ansaugöffnungen 9 durch Bohren eingebracht sind. In Fig. 2 ist die Alternative mit den Schneiden 6 ebenfalls eingezeichnet. Die Späne dringen in jedem Fall in den Hohlraum 22 des Hohlfräsers ein und können aus diesem abgesogen werden. Gemäß der Erfindung ist vorgesehen, daß der Hohlfräser auf ein Standrohr 2 von unten bei der Montage aufgesteckt ist, wobei das Standrohr unmittelbar oberhalb der Ansaugöffnungen 5 und 19 endet. Eine Gleitbuchse 7 verhindert zum einen das Eindringen von Staub und Späne in den Zwischenraum zwischen Standrohr und Innenseite der Wandung 21 des Hohlfräsers 3 und stellt andererseits eine zusätzliche Lagerstelle für den langen Hohlfräser dar. Zur Vermeidung von Schwingungen ist ein weiteres Gleitlager 8 vorgesehen, das zwischen der Hohlwelle 9 und dem Standrohr eingebracht ist. Die Lagerstellen des Motors, die im Teilschnitt eingezeichnet sind, sind nicht erfindungsrelevant und brauchen hier auch nicht näher beschrieben zu werden. Oberhalb des Motors ist ein Stutzen 12 vorgesehen, der zur Befestigung des Standrohres 2 einerseits und zur Befestigung eines Absaugschlauches 15 einer Absaugeinrichtung, die außerhalb der Anordnung vorgesehen ist, dient. Die Befestigung des Standrohres erfolgt durch einen Schraubring 14, der einen Spannring 13 festdrückt. Dieser sollte, ebenso wie der Anschlußstutzen, aus elektrisch leitendem Material bestehen, so daß auch dann, wenn ein Kunststoffrohr verwendet wird, eine elektrische Kontaktierung gegeben ist, um statische Aufladungen zu vermeiden. Dieser Effekt kann auch verbessert werden, indem das Standrohr aus einem elektrisch leitfähigem Kunststoff hergestellt wird oder mit einer Leitschicht versehen ist. Zur Kühlung der Lagerstellen und um eine gewisse Luftzirkulation auch in dem Zwischenbereich zwischen Standrohr und Innenseite des Hohlfräsers oder Innenseite der Hohlwelle zu erreichen, sind Querbohrungen 10 als Belüftungsbohrungen vorgesehen, über die eine Luftzirkulation möglich ist. Vorgesetzte Luftfilter 11 vermeiden dabei das Eindringen von Staub oder Partikeln in den Hohlraum. Der Luftstrom wird dabei von oben nach unten durch die hohe Luftströmung in dem Standrohr erzwungen. Daß die Lager so ausgebildet sind, daß Luft in axialer Richtung diese durchströmen kann, versteht sich von selbst. Zum Beispiel weisen einsetzbare Gleitlager aus Kunststoff einen Luftspalt von ca. 0,3 mm auf. Der Kühleffekt kann verstärkt werden indem Pressluft in die Belüftungsbohrungen eingegeben wird.
In dem Zwischenraum können auch Thermofühler vorgesehen sein, die insbesondere die Temperatur in den Bereichen der Gleitlager 8 oder 7 überwachen und den Motor abschalten, wenn eine zu hohe Temperatur erreicht wird. Ebenso kann aber auch die Luftsäule bzw. die Luftströmung durch das Standrohr 2 gemessen werden, um anhand dieser sicherzustellen, daß die an den Gleitlagern vorbeiströmende Luft in ausreichender Menge vorbeiströmt, um eine gesicherte Kühlung zu erreichen.

Die durch die Schneidzähne oder Raspelzähne abgetragenen Späne 20 werden durch die Ansaugöffnungen in den Hohlraum hineingesaugt. Die Radialkraftkomponente ist bereits beim Eintritt in das Standrohr so gering und wird durch die Drehung des Hohlfräsers nicht mehr beschleunigt, so daß eine ungehinderte Abströmung der Teile in dem Luftstrom sichergestellt ist. Zentrifugalkräfte des rotierenden Hohlfräsers können keine Radialkraftkomponenten auf die in dem statischen Rohr transportierten Späne 20 ausüben, so daß ein Zusetzen des Rohres nicht möglich ist. Als Gleitlager 7 und 8 eignen sich vorzugweise wartungsfreie Gleitlager aus Kunststoff. Selbst bei der Bearbeitung von flexiblen geschäumten Kunststoffen und Weichschäumen bis zum Raumgewicht von 75 g/l ist eine problemlose Bearbeitung möglich, auch dann, wenn der Hohlfräser mit 8000 und mehr U/min angetrieben wird.

## Patentansprüche

1. Hohlfräswerkzeug mit einer Einrichtung zum Absaugen von komprimierbaren, abgetragenen Spänen (20) aus festem, weichem oder elastischem Material durch mindestens eine Saugöffnung (5, 19) in der Wand (21) des Hohlfräswerkzeuges (3) durch den Innenraum (22) desselben, gekennzeichnet durch ein Standrohr (2), das feststehend angeordnet ist und in das Hohlfräswerkzeug (3) hineinragt und in diesem vor der Saugöffnung (5, 19) in dem Hohlfräswerkzeug (3) endet und auf das das Hohlfräswerkzeug (3) aufgesetzt und demgegenüber drehbar angeordnet ist und an das ein Absauger angeschlossen ist, der die abgetragenen Späne im Luftstrom absaugt.

2. Hohlfräswerkzeug nach Anspruch 1, **dadurch gekennzeichnet**, daß das Standrohr (2) durch die Hohlantriebswelle (9) einer Antriebseinrichtung (1) hindurchgeführt ist und daß an der vom Hohlfräswerkzeug (3) abgewandten Seit an das Standrohr (2) ein Absaugschlauch (15) des Absaugers angeschlossen ist.

3. Hohlfräswerkzeug nach Anspruch 1, **dadurch gekennzeichnet**, daß das Standrohr (2) vor oder in der Antriebseinrichtung (1) endet und zentrisch in der Antriebshohlwelle (9) angeordnet ist und eine radiale Öffnung in der Wandung (2) vor dem Motor aufweist, die in einem ringförmig vorgesehenen Saugkanal mündet, durch den die Späne abgesaugt werden.

4. Hohlfräswerkzeug nach Anspruch 1, **dadurch gekennzeichnet**, daß in dem Standrohr eine Antriebswelle gelagert ist, daß zwischen dieser und dem Standrohr der Saugkanal besteht, daß das Standrohr vor dem Motor endet und in der Wand mindestens eine Austrittsöffnung vorgesehen ist, die in einen Saugkanal mündet, an den der Absauger angeschlossen ist, und daß das Fräswerkzeug am unteren Ende der Welle befestigt ist.

5. Hohlfräswerkzeug nach Anspruch 3, **dadurch gekennzeichnet**, daß die Saugeinrichtung aus einem mehrflügligen Ventilator in einem Ringgehäuse besteht, der synchron mit der Kohlwelle, die das Standrohr umgibt, an dem der Hohlfräser befestigt ist, sich dreht und daß die Absaugeinrichtung einen Austrittsanschluß am Ringgehäuse zum Anschließen eines Absaugschlauches oder Abführschlauches aufweist.

6. Hohlfräswerkzeug nach Anspruch 1, 2 oder 3, **dadurch gekennzeichnet**, daß das Standrohr gegenüber der Antriebseinrichtung längsverschieblich angeordnet ist und die Ausfahrlänge abhängig von der Länge des Hohlfräsers und/oder dessen beabstandete Anordnung zum Antriebsmotor ist, wobei die Antriebshohlwelle entsprechend lang, verschieblich, verlängerbar oder austauschbar ausgebildet ist.

7. Hohlfräswerkzeug nach Anspruch 4, **dadurch gekennzeichnet**, daß die Längen des Standrohres und der Welle wählbar und auf das Hohlfräswerkzeug abgestimmt austauschbar oder verlängerbar ausgebildet sind.

8. Hohlfräswerkzeug nach einem der vorhergehenden Ansprüche, **dadurch gekennzeichnet**, daß zwischen der Antriebshohlwelle (9) und/oder dem Hohlfräswerkzeug (3) bzw. der Welle und dem Standrohr (2) mindestens ein Gleit-, (7, 8) Kugel-, Nadel- oder Rollenlager zwischengefügt sind.

9. Hohlfräswerkzeug nach einem der Ansprüche 1 bis 3 oder 5 bis 8, **dadurch gekennzeichnet**, daß zwischen der Hohlantriebswelle (3) und/oder dem Hohlfräswerkzeug (3) und dem Standrohr ein Zwischenraum gegeben ist, der einerseits eine Berührung der Mantelflächen auch bei extremer Belastung ausschließt und andererseits der Innendurchmesser des Standrohres so groß ist, daß die Späne ungehindert hindurchsaugbar sind.

10. Hohlfräswerkzeug nach einem der vorhergehenden Ansprüche, **dadurch gekennzeichnet**, daß der Hohlfräser die Saugöffnung (5, 19) nur im Bereich der Fräserspitze aufweist und daß das Standrohr (2) im Absaugkanal bis vor die Saugöffnung (5, 19) reicht.

11. Hohlfräswerkzeug nach Anspruch 10, **dadurch gekennzeichnet**, daß am Ende des Standrohres (2) der Hohlfräser gleitend auf diesem gelagert ist und daß am anderen Ende des Standrohres ein Absaugstutzen (12) zum Anschluß eines Absaugschlauches (15) befestigt ist.

12. Hohlfräswerkzeug nach Anspruch 8 oder 11, **dadurch gekennzeichnet**, daß mindestens zwei beabstandete Gleitbuchsen oder Lager vorhanden sind.

13. Hohlfräswerkzeug nach Anspruch 1, 8 oder 12, **dadurch gekennzeichnet**, daß in der Wand der Antriebshohlwelle radial mindestens eine Lüftungsbohrung mindestens oberhalb des oberen Lagers, Gleitlagers bzw. einer Gleitbuchse, vorgesehen ist und daß die Lager in axialer Richtung des Standrohres luftdurchlässig sind und der Saugluftstrom im Standrohr Luft durch die Lüftungsbohrung in den Zwischenraum und durch diesen in das Hohlfräserwerkzeug saugt.

14. Hohlfräswerkzeug nach Anspruch 13, **dadurch gekennzeichnet**, daß Lüftungsbohrungen als Querbohrungen in den Absaugstutzen (12) eingebracht sind.

15. Hohlfräswerkzeug nach Anspruch 14, **dadurch gekennzeichnet**, daß in die Belüftungsbohrungen Luftfilter eingesetzt sind und/oder Pressluft eingeleitet wird.

16. Hohlfräswerkzeug nach Anspruch 1, **dadurch gekennzeichnet**, daß das Standrohr (2) aus Metall oder Kunststoff besteht und mit dem Massepotential führenden Gehäuse der Antriebseinrichtung (1) oder einer Massepotential führenden Leitung verbunden ist.

17. Hohlfräswerkzeug nach Anspruch 1, **dadurch gekennzeichnet**, daß die Antriebseinrichtung (1) ein Elektromotor, ein pneumatischer oder hydraulischer Motor oder ein Getriebe ist, das von einem seitlich oder in Verlängerung vorgesehenen Motor antreibbar ist.

18. Hohlfräswerkzeug nach Anspruch 1 oder 16, **dadurch gekennzeichnet**, daß das Standrohr aus elektrisch leitfähigem Kunststoff oder aus Kunststoff mit einer leitfähigen Innen- und/oder Außenbeschichtung besteht und über einen Erdmassepotential führenden Ring am Absaugstutzen befestigt ist oder einen solchen aufweist, die auf Erdmassepotential gelegt ist.

19. Hohlfräswerkzeug nach Anspruch 1, **dadurch gekennzeichnet**, daß eine Luftstrommeßeinrichtung in dem Absaugkanal oder in dem Zwischenkanal zwischen Standrohr und Hohlantriebswelle mündend vorgesehen ist und daß bei Unterschreiten eines bestimmten Luftströmungswertes der Motor abschaltet.

20. Hohlfräswerkzeug nach einem der vorhergehenden Ansprüche, zum Fräsen von Hart- oder Weichschaumstoffen, Kunststoffen, Aluminium oder federnde Späne bei der Spanabhebung bildenden Materialien.

21. Hohlfräswerkzeug nach Anspruch 1, **dadurch gekennzeichnet**, daß das Hohlfräswerkzeug (3) vorstehende Schneiden (6, 27) und/oder Raspelzähne (18) aufweist und daß die Ansaugöffnungen (5, 19) zwischen diesen oder in diese übergehend angeordnet sind.

22. Hohlfräswerkzeug nach Anspruch 21, **dadurch gekennzeichnet**, daß die Ansaugöffnungen in Drehrichtung keilförmig ansteigend verlaufende Gleitwände in der Wand aufweisen.

23. Hohlfräswerkzeug nach Anspruch 1, **dadurch gekennzeichnet**, daß das Standrohr oberhalb der von der Fräserspitze entferntesten Saugöffnung (5, 19) in dem Hohlfräswerkzeug endet.

24. Hohlfräswerkzeug nach Anspruch 1, **dadurch gekennzeichnet**, daß das Standrohr vor der Hohlfräserspitze endet, daß in dieser Absaugöffnungen vorgesehen sind, daß über die Länge des Hohlfräsers in dem Standrohr Ansaugöffnungen vorgesehen sind, die auf gleicher Höhe mit Ansaugdurchbrüchen in der Wand des Hohlfräsers angeordnet sind, und daß durch diese hindurch die Späne in den Innenraum des Standrohres hineinsaugbar sind.

25. Hohlfräswerkzeug nach einem der vorhergehenden Ansprüche, **dadurch gekennzeichnet**, daß das Hohlfräswerkzeug ein fingerartiger längerer Hohlfräser ist.

## Claims

1. Hollow milling tool with an equipment for sucking away compressible swarf (20) of hard, soft or elastic material through at least one suction opening (5, 19) in the wall (21) of the hollow milling tool (3) through the interior space (22) thereof, characterised by a standpipe (2), which is arranged to be stationary, projects into the hollow milling tool (3), ends in this before the suction opening (5, 19) in the hollow milling tool (3) and on which the hollow milling tool (13) is placed and arranged to be rotatable relative thereto and to which a suction device is connected, which sucks the swarf away in the air current.

2. Hollow milling tool according to claim 1, characterised thereby, that the standpipe (2) is led through the hollow drive shaft (9) of a drive equipment (1) and a suction hose (15) of the suction device is connected to the standpipe (2) at the side remote from the hollow milling tool (3).

3. Hollow milling tool according to claim 1, characterised thereby, that the standpipe (2) ends before or in the drive equipment (1), is arranged centrally in the hollow drive shaft (9) and has a radial opening, which opens into an annularly provided suction channel, through which the swarf is sucked away, in the wall (2) in front of the motor.

4. Hollow milling tool according to claim 1, characterised thereby, that a drive shaft is borne in the standpipe and the suction channel exists between these, that the standpipe ends before the motor and at least one exit opening, which opens into a suction channel, to which the suction device is associated, is provided in the wall and that the milling tool is fastened at the lower end of the shaft.

5. Hollow milling tool according to claim 3, characterised thereby, that the suction equipment consists of a multibladed fan in an annular housing, which fan rotates synchronously with the hollow shaft which surrounds the standpipe, at which the hollow miller is fastened and that the suction equipment comprises an exit connection at the annular housing for the connection of a suction hose or discharge hose.

6. Hollow milling tool according to claim 1, 2 or 3, characterised thereby, that the standpipe is arranged to be displaceable longitudinally relative to the drive equipment and the length of outward travel is dependent on the length of the hollow milling tool and/or its spaced arrangement from the drive motor, wherein the hollow drive shaft is formed to be of appropriate length, displaceable, prolongable or exchangeable.

7. Hollow milling tool according to claim 4, characterised thereby, that the lengths of the standpipe and of the shaft are selectable and formed to be exchangeable or prolongable matched to the hollow milling tool.

8. Hollow milling tool according to one of the preceding claims, characterised thereby, that at least one sliding bearing (7, 8), ball bearing, needle bearing or roller bearing is interposed between the hollow drive shaft (9) and/or the hollow milling tool (3) or the shaft and the standpipe (2).

9. Hollow milling tool according to one of the claims 1 to 3 and 5, characterised thereby, that an intermediate space, which on the one hand excludes a touching of the casing even in the case of extreme loading and on the other hand the internal diameter of the standpipe is so great that the swarf can be sucked through unhindered, is given between the hollow drive shaft (9) and/or the hollow milling tool (3) and the standpipe.

10. Hollow milling tool according to one of the preceding claims, characterised thereby, that the hollow milling tool displays the suction opening (5, 19) only in the region of the mill tool tip and that the standpipe (2) reaches into the suction channel to in front of the suction opening (5, 19).

11. Hollow milling tool according to claim 10, characterised thereby, that the hollow milling tool is mounted to be sliding on the end of the standpipe and a suction nipple (12) for the connection of a suction hose (15) is fastened at the other end of the standpipe.

12. Hollow milling tool according to claim 8 or 11, characterised thereby, that at least two spaced slide bushings or bearings are present.

13. Hollow milling tool according to claim 1, 8 or 12, characterised thereby, that at least one ventilation bore is provided radially in the wall of the hollow drive shaft at least above the upper bearing, slide bearing or slide bushing and that the bearings are permeable by air in axial direction of the standpipe and the suction air current in the standpipe inducts air through the ventilation bore into the intermediate space and through this into the hollow milling tool.

14. Hollow milling tool according to claim 13, characterised thereby, that ventilation bores are introduced as transverse bores into the suction nipple (12).

15. Hollow milling tool according to claim 14, characterised thereby, that air filters are inserted and/or compressed air is introduced into the ventilation bores.

16. Hollow milling tool according to claim 1, characterised thereby, that the standpipe (2) consists of metal or synthetic material and is connected with the housing, which carries ground potential, of the drive equipment (1) or with a conductor which carries ground potential.

17. Hollow milling tool according to claim 1, characterised thereby, that the drive equipment (1) is an electrical motor, a pneumatic or a hydraulic motor or a gear which is drivable by a motor which is provided laterally or in prolongation.

18. Hollow milling tool according to claim 1 or 16, characterised thereby, that the standpipe consists of electrically conductive synthetic material or of synthetic material with a conductive internal and/or external coating and is fastened at the suction nipple by a ring carrying earth ground potential or comprises such as is applied to earth ground potential.

19. Hollow milling tool according to claim 1, characterised thereby, that an air-current-measuring equipment is provided to open in the exhaust channel or in the intermediate channel between the standpipe and the hollow drive shaft and that the motor switches off on a certain air flow value being fallen below.

20. Hollow milling tool according to one of the preceding claims for the milling of hard or soft foam materials, synthetic materials, aluminium or materials forming resilient swarf during the cutting producing the swarf.

21. Hollow milling tool according to claim 1, characterised thereby, that the hollow milling tool (3) comprises protruding cutting edges (6, 27) and/or rasp teeth (18) and that the suction openings (5, 19) are arranged between these or pass over into these.

22. Hollow milling tool according to claim 21, characterised thereby, that the suction openings display slide walls in the wall, which extend to rise in wedge shape in direction of rotation.

23. Hollow milling tool according to claim 1, characterised thereby, that the standpipe ends in the hollow milling tool above the suction opening (5, 19) furthest away from the milling tool tip.

24. Hollow milling tool according to claim 1, characterised thereby, that the standpipe ends in front of the milling tool tip, that suction openings are provided in this, that suction openings, which are arranged at the same height as suction passages in the wall of the hollow milling tool, are provided in the standpipe over the length of the hollow milling tool and that the swarf is inductable through these into the interior space of the standpipe.

25. Hollow milling tool according to one of the preceding claims, characterised thereby, that the hollow milling tool is a longer hollow milling cutter in the manner of a finger.

## Revendications

1. Outil de fraisage creux, comportant un dispositif pour aspirer des copeaux (20) enlevés et susceptibles d'être comprimés depuis un matériau solide, souple ou élastique par au moins une ouverture d'aspiration (5, 19) dans la paroi (21) de l'outil de fraisage creux (3) à travers l'espace intérieur (22) de celui-ci, caractérisé par un tube vertical (2) qui est agencé de inanière fixe et qui pénètre dans l'outil de fraisage creux (3) et qui se termine dans l'outil de fraisage creux devant l'ouverture d'aspiration (5, 19) et sur lequel est posé l'outil de fraisage creux (3) qui est en rotation par rapport à celui-ci, et auquel est raccordé un aspirateur qui aspire les copeaux enlevés dans l'écoulement d'air.

2. Outil de fraisage creux selon la revendication 1, caractérisé en ce que le tube vertical (2) est guidé à travers l'arbre d'entraînement creux (9) d'un dispositif d'entraînement (1), et en ce qu'un tuyau d'aspiration (15) de l'aspirateur est raccordé au tube vertical (2) sur le côté détourné de l'outil de fraisage creux (3).

3. Outil de fraisage creux selon la revendication 1, caractérisé en ce que le tube vertical (2) se termine devant ou dans le dispositif d'entraînement (1) et est agencé au centre dans l'arbre d'entraînement creux (9) et présente une ouverture radiale dans la paroi (2) en avant dit moteur, qui débouche dans un canal d'aspiration annulaire à travers lequel sont aspirés les copeaux.

4. Outil de fraisage creux selon la revendication 1, caractérisé en ce qu'un arbre d'entraînement est monté dans le tube vertical, en ce que le canal d'aspiration est défini entre cet arbre d'entraînement et le tube vertical, en ce que le tube vertical se termine en avant du moteur, et en ce qu'au moins une ouverture de sortie est prévue dans la paroi, qui débouche dans un canal d'aspiration auquel est raccordé l'aspirateur, et en ce que l'outil de fraisage creux est fixé à l'extrémité inférieure de l'arbre.

5. Outil de fraisage creux selon la revendication 3, caractérisé en ce que le dispositif d'aspiration est constitué par un ventilateur à plusieurs pales dans un boîtier annulaire, qui tourne en synchronisme avec l'arbre creux qui entoure le tube vertical sur lequel est fixée la fraise creuse, et en ce que le dispositif d'aspiration présente un raccord de sortie sur le boîtier annulaire pour raccorder un tuyau d'aspiration ou un tuyau d'évacuation.

6. Outil de fraisage creux selon l'une quelconque des revendications 1, 2 et 3, caractérisé en ce que le tube vertical est agencé de façon longitudinalement mobile par rapport au dispositif d'entraînement, et la longueur de déploiement dépend de la longueur de la fraise creuse et/ou de son agencement écarté dit moteur d'entraînement, l'arbre d'entraînement creux étant réalisé avec une longueur correspondante, de façon mobile, variable en longueur ou interchangeable.

7. Outil de fraisage creux selon la revendication 4, caractérisé en ce que les longueurs dit tube vertical et de l'arbre peuvent être choisies et sont interchangeables ou variables en longueur en adaptation à l'outil de fraisage creux.

8. Outil de fraisage creux selon l'une quelconque des revendications précédentes, caractérisé en ce qu'au moins un palier coulissant, (7, 8) à billes, à aiguilles ou à rouleaux est interposé entre l'arbre d'entraînement creux (9) et/ou l'outil de fraisage creux (3) ou bien entre l'arbre et le tube vertical (2).

9. Outil de fraisage creux selon l'une quelconque des revendications 1 à 3 ou 5 à 8, caractérisé en ce qu'un intervalle existe entre l'arbre d'entraînement creux (3) et/ou l'outil de fraisage creux (3) et le tube vertical, qui exclue d'une part un contact des surfaces enveloppes même lors d'une charge extrême, et que d'autre part le diamètre intérieur du tube vertical est si important que les copeaux peuvent être aspirés sans entrave à travers celui-ci.

10. Outil de fraisage creux selon l'une quelconque des revendications précédentes, caractérisé en ce que la fraise creuse présente l'ouverture d'aspiration (5, 19) uniquement dans la région de la pointe de fraisage et que le tube vertical (2) va dans le canal d'aspiration jusqu'en avant de l'ouverture d'aspiration (5, 19).

11. Outil de fraisage creux selon la revendication 10, caractérisé en ce qu'à l'extrémité du tube vertical (2), la fraise creuse est montée en coulissement sur celui-ci, et qu'un manchon d'aspiration (12) pour raccorder un tuyau d'aspiration (15) est fixé à l'autre extrémité du tube vertical.

12. Outil de fraisage creux selon l'une ou l'autre des revendications 8 et 11, caractérisé et, ce qu'il est prévit ait moins deux douilles de coulissement ou paliers écartés l'un de l'autre.

13. Outil de fraisage creux selon l'une quelconque des revendications 1, 8 ou 12, caractérisé en ce qu'il est prévu radialement dans la paroi de l'arbre d'entraînement creux au moins un perçage de mise à l'air au moins au-dessus dit palier supérieur, du palier de coulissement ou d'une douille de coulissement, et en ce que les paliers sont perméables à l'air en direction axiale du tube vertical et l'écoulement d'air d'aspiration dans le tube vertical aspire de l'air à travers le perçage de mise à l'air jusque dans l'intervalle et à travers celui-ci jusque dans l'outil de fraisage creux.

14. Outil de fraisage creux selon la revendication 13, caractérisé en ce que des perçages de mise à l'air sont ménagés en tant que perçages transversaux dans le manchon d'aspiration (12).

15. Outil de fraisage creux selon la revendication 14, caractérisé en ce que des filtres à air sont mis en place dans les perçages de mise à l'air et/ou de l'air comprimé est introduit.

16. Outil de fraisage creux selon la revendication 1, caractérisé en ce que le tube vertical (2) est constitué en métal ou en matière plastique et est relié au boîtier menant le potentiel de masse du dispositif d'entraînement (1) ou bien à une ligne menant le potentiel de masse.

17. Outil de fraisage creux selon la revendication 1, caractérisé en ce que le dispositif d'entraînement (1) est un moteur électrique, un moteur pneumatique ou hydraulique ou bien une transmission susceptible d'être entraînée par un moteur prévit latéralement ou en prolongement.

18. Outil de fraisage creux selon l'une ou l'autre des revendications 1 et 16, caractérisé en ce que le tube vertical est constitué en une matière plastique électriquement conductrice ou en une matière plastique présentant un revêtement intérieur et/ou extérieur conducteur, et est fixé sur le manchon d'aspiration au moyen d'un anneau menant un potentiel de masse de terre ou bien présente un tel manchon qui est mis au potentiel de tasse de terre.

19. Outil de fraisage creux selon la revendication 1, caractérisé en ce qu'il est prévu un dispositif de mesure d'écoulement d'air de manière à déboucher dans le canal d'aspiration ou bien dans le canal intermédiaire entre le tube vertical et l'arbre d'entraînement creux, et en ce que lorsqu'une valeur d'écoulement d'air déterminée n'est pas atteinte, le moteur s'arrête.

20. Outil de fraisage creux selon l'une quelconque des revendications précédentes pour fraiser des matières en mousse dure ou souple, des matières en plastique, de l'aluminium ou bien des matériaux formant des copeaux élastiques lors de l'enlèvement de copeaux.

21. Outil de fraisage creux selon la revendication 1, caractérisé en ce que l'outil de fraisage creux (3) présente des tranchants dépassants (6, 27) et/ou des dents de râpe (18), et en ce que les ouvertures d'aspiration (5, 19) sont agencées dans ceux-ci/celles-ci ou de manière à se transformer en ceux-ci/celles-ci.

22. Outil de fraisage creux selon la revendication 21, caractérisé en ce que les ouvertures d'aspiration présentent dans la paroi des parois coulissantes qui s'étendent de manière à monter en forme de coin en direction de rotation.

23. Outil de fraisage creux selon la revendication 1, caractérisé en ce que le tube vertical se termine dans l'outil de fraisage creux au-dessus de l'ouverture d'aspiration (5, 19) la plus éloignée de la pointe de fraisage.

24. Outil de fraisage creux selon la revendication 1, caractérisé en ce que le tube vertical se termine en avant de la pointe de fraisage creuse, en ce que des ouvertures d'aspiration sont prévues dans celle-ci, en ce que des ouvertures d'aspiration sont prévues dans le tube vertical sur la longueur de la fraise creuse, qui sont ménagées à la même hauteur que les passages d'aspiration dans la paroi de la fraise creuse, et en ce que les copeaux peuvent être aspirés à travers celles-ci jusque dans l'espace intérieur du tube vertical.

25. Outil de fraisage creux selon l'une quelconque des revendications précédentes, caractérisé en ce que l'outil de fraisage creux est une fraise creuse allongée et en forme de doigt.
